# EUROPÄISCHE PATENTSCHRIFT

(11) **EP 1 672 248 B1**
(45) Veröffentlichungstag und Bekanntmachung des Hinweises auf die Patenterteilung: **13.08.2008**
(21) Anmeldenummer: 05026296.3
(22) Anmeldetag: 02.12.2005
(51) Int. Cl.: F16H 45/02

(54) **Hydrodynamische Kopplungsvorrichtung und entsprechendes Verfahren zur Fluiddurchströmung**
Hydrodynamic torque converter and corresponding fluid circulation method
Convertisseur hydrodynamique de couple et méthode correspondante de circulation de fluide

(30) Priorität: 15.12.2004 DE 102004060257
(43) Veröffentlichungstag der Anmeldung: 21.06.2006
(73) Patentinhaber: ZF FRIEDRICHSHAFEN AG, 88046 Friedrichshafen (DE)
(72) Erfinder: Ackermann, Jürgen, 97421 Schweinfurt (DE)

(56) Entgegenhaltungen:
- EP-A1- 0 770 797
- DE-A1- 3 543 013
- DE-A1- 10 233 335
- DE-A1- 19 812 865
- FR-A1- 2 478 770
- FR-A1- 2 556 807
- JP-A- 5 296 313
- JP-A- 53 032 264
- US-A- 3 185 273
- US-A- 4 108 289

## Beschreibung

Die Erfindung betrifft eine hydrodynamische Kopplungsvorrichtung gemäß dem Oberbegriff des Anspruches 1,

Aus der US 4,108,289 A die als nächstliegender Stand der Technik gegenüber unabhängigen Ansprüchen 1 und 20 angesehen wird, ist eine hydrodynamische Kopplungsvorrichtung, als hydrodynamischer Drehmomentwandler ausgebildet, bekannt, deren Kupplungsgehäuse in üblicher Weise mit einem Antrieb, wie beispielsweise einer Brennkraftmaschine, in Drehverbindung gebracht wird und ein Pumpenrad umfasst, das mit einem Turbinenrad und einem Leitrad einen hydrodynamischen Kreis bildet. Während das Turbinenrad mit einem Abtrieb, wie beispielsweise einer Getriebeeingangswelle, drehfest verbunden ist, ist das Leitrad über einen Freilauf auf einer Stützwelle angeordnet, die radial zwischen einer Pumpenradnabe und der Getriebeeingangswelle vorgesehen ist. Darüber hinaus weist die hydrodynamische Kopplungsvorrichtung auch eine Überbrückungskupplung mit einem ringförmigen Kolben auf, der über eine axial flexible Scheibennabe drehfest, aber axial verlagerbar mit dem Kupplungsgehäuse verbunden ist.

Die hydrodynamische Kopplungsvorrichtung ist als Zwei-Leitungs-System ausgebildet, wodurch sich folgende Druck- bzw. Strömungsverhältnisse ausbilden:

Ein erster Strömungsweg entsteht unter Nutzung eines Durchflusskanals radial zwischen der Pumpenradnabe und der Stützwelle, und mündet in den hydrodynamischen Kreis, während ein zweiter Strömungsweg unter Nutzung eines die Getriebeeingangswelle durchdringenden Durchflusskanals in einen Druckraum mündet, der sich axial zwischen der dem Kolben zugeordneten, axial flexiblen Scheibennabe und einem Gehäusedeckel des Kupplungsgehäuses befindet. Durch Zuführung von Kupplungsfluid über den ersten Strömungsweg entsteht ein Überdruck im hydrodynamischen Kreis gegenüber dem Druckraum, wodurch der Kolben in Richtung zum Gehäusedeckel des Kupplungsgehäuses beaufschlagt und dadurch eine Drehmitnahme durch das Kupplungsgehäuse über Reibflächen beendet wird. Die Überbrückungskupplung ist dann ausgerückt. Umgekehrt wird diese Drehmitnahme über die Reibflächen wieder hergestellt, wenn durch Zuführung von Kupplungsfluid über den zweiten Strömungsweg ein Überdruck im Druckraum gegenüber dem hydrodynamischen Kreis erzeugt wird, und der Kolben dadurch eine Axialverlagerung in Richtung zum hydrodynamischen Kreis erfährt. Die Überbrückungskupplung ist dann eingerückt.

Der hydrodynamische Kreis und der Druckraum sind durch eine dem ringförmigen Kolben zugeordnete, in dessen Umfangsbereich eingesetzte Abdichtung voneinander getrennt, so dass ein Austausch von Kupplungsfluid zwischen diesen beiden Räumen - also Druckraum und hydrodynamischer Kreis - zumindest reduziert ist. Um dennoch einen definierten Volumenstrom zwischen den beiden Räumen verbleiben zu lassen, erstreckt sich in der axial elastischen Scheibennabe wenigstens eine Drosselstelle, bei welcher die jeweilige Durchflußrichtung vom jeweils anliegenden Differenzdruck zwischen den beiden Räumen abhängig ist. Die Drosselstelle kann mit einem Rückschlagventil versehen sein, das bei eingerückter Überbrückungskupplung einen Übertritt von Kupplungsfluid aus dem Druckraum in den hydrodynamischen Kreis unterbindet, bei ausgedrückter Überbrückungskupplung einen Übertritt von Kupplungsfluid aus dem hydrodynamischen Kreis in den Druckraum dagegen zulässt. Auf diese Weise kann bei ausgerückter Überbrückungskupplung verbrauchtes Kupplungsfluid stets aus dem hydrodynamischen Kreis über den Druckraum aus der Kopplungsvorrichtung heraus geführt werden, während bei eingerückter Überbrückungskupplung ein Druckverlust im Druckraum gegenüber dem hydrodynamischen Kreis zumindest weitgehend vermieden wird.

Von Nachteil bei der bekannten hydrodynamischen Kopplungsvorrichtung ist der beträchtliche konstruktive und fertigungstechnische Aufwand, der sich durch Aufbau der Überbrückungskupplung mit der axial elastischen Scheibennabe und dem ringförmigen Kolben ergibt. Die gleiche Konstruktion findet sich bei einer hydrodynamischen Kopplungsvorrichtung, die aus der JP 53 032264 A bekannt ist.

Auch die EP 0 770 797 A1 zeigt eine hydrodynamischen Kopplungsvorrichtung, bei welcher die Überbrückungskupplung vom hydrodynamischen Kreis umschlossen ist, und zwischen einem Druckraum und einem hydrodynamischen Kreis wenigstens eine einen Austausch von Kupplungsfluid mit dem Druckraum zumindest reduzierende Abdichtung sowie wenigstens eine einen definierten Austausch von Kupplungsfluid mit dem Druckraum gewährende Drosselstelle vorgesehen ist. Diese Kopplungsvorrichtung zeigt, bedingt durch axiale Anordnung eines Gehäusedeckels eines Kupplungsgehäuses, eines Ansteuerelementes für einen Torsionsschwingungsdämpfer, eines Kolbens einer Überbrückungskupplung und Küpplungselementen der Überbrückungskupplung axial nebeneinander eine konstruktiv aufwändige Ausführung.

Eine andere Ausführung eines hydrodynamischen Drehmomentwandlers als Zwei-Leitungs-System zeigt die DE 44 23 640 A1. Bei dieser hydrodynamischen Kopplungsvorrichtung ergeben sich folgende Druck- bzw. Strömungsverhältnisse:

An einen ersten Strömungsweg, der Durchflusskanäle radial zwischen der Pumpenradnabe und der Stützwelle einerseits und radial zwischen der Stützwelle und der Getriebeeingangswelle andererseits aufweist, ist eine erste Druckmittelleitung angeschlossen, die durch beidseits eines Freilaufes eines Leitrades angeordnete, mit Durchflußkanälen für Kupplungsfluid versehene Druckscheiben zur Versorgung eines hydrodynamischen Kreises gebildet wird. Bedingt durch einen Überdruck im hydrodynamischen Kreis wird ein Kolben einer Überbrückungskupplung in Richtung zu einem benachbarten Gehäusedeckel eines Kupplungsgehäuses beaufschlagt und erfährt dadurch eine Drehmitnahme mit dem Kupplungsgehäuse über Reibflächen. Umgekehrt wird diese Drehmitnahme an der Reibfläche gelöst, wenn über eine zweite Druckmittelleitung ein dem Kolben zugeordneter, axial zwischen demselben und dem Gehäusedeckel vorgesehener Druckraum mit Überdruck gegenüber dem hydrodynamischen Kreis beaufschlagt wird und der Kolben dadurch eine Axialverlagerung in Richtung zum hydrodynamischen Kreis erfährt. Die zweite Druckmittelleitung ist an einen zweiten Strömungsweg angeschlossen, der über eine Mittenbohrung der Getriebeeingangswelle führt. Beide Strömungswege sind jeweils an einen Fluidmittelvorrat angeschlossen.

Wesentliches Prinzip eines derartigen Zwei-Leitungs-Systems, aber auch wesentlicher Nachteil ist die Anordnung der Überbrückungskupplung als Trennstelle zwischen dem hydrodynamischen Kreis und dem Druckraum. Dadurch kommt der zumindest einen Reibfläche in eingerücktem Zustand der Überbrückungskupplung nicht nur die Funktion einer Drehmomentübertragung vom Kupplungsgehäuse auf den Abtrieb unter Umgehung des hydrodynamischen Kreises zu, sondern darüber hinaus eine Abdichtung des hydrodynamischen Kreises gegenüber dem in diesem Betriebszustand im wesentlichen drucklosen Druckraum. Bei ungenügender Abdichtung, beispielsweise aufgrund großzügiger Nutung im Bereich der Reibflächen, würde ein ungewollt starker Volumenstrom an Kupplungsfluid vom hydrodynamischen Kreis über die Überbrückungskupplung in die Druckkammer und damit aus dem Kupplungsgehäuse herausgeführt, und müsste dementsprechend aus dem Fluidmittelvorrat wieder ersetzt werden. Andererseits würde sich bei extremer Abdichtung im Bereich der Überbrückungskupplung infolge einer sehr begrenzten Nutung im Bereich der Reibflächen oder gar bei Verzicht auf eine Nutung das Problem ergeben, dass insbesondere bei durch Schlupf des Kolbens gegenüber dem Kupplungsgehäuse bedingter Aufheizung der zumindest einen Reibfläche sehr rasch eine Verglasung und damit eine Zerstörung von Reibbelägen im Bereich der Reibflächen eintreten würde. Somit muss ein exakt definierter Durchfluss im Bereich der Reibflächen generiert werden, weshalb umfangreiche Erprobungen mit unterschiedlich dimensionierten Nutungen vorgenommen werden müssen. Aber selbst bei korrekter Bemessung der Nutungen ist nicht vermeidbar, dass diese in Abhängigkeit von Verschleiß oder eventueller Toleranzen nicht den exakt erwünschten Volumenstrom an Kupplungsfluid passieren lassen.

Um diese Problematik zu lösen, sind Konstruktionen bekannt, bei denen nicht mehr die Nutung den die Überbrückungskupplung in eingerücktem Zustand passierenden Volumenstrom bestimmt, sondern wenigstens ein Drosseldurchfluss, der gemäß der DE 195 08 855 A1 im Kolben der Überbrückungskupplung im Radialbereich der wenigstens einen Reibfläche vorgesehen ist. Dieser Drosseldurchfluß dient dazu, einer der wenigstens einen Reibfläche zugeordneten Nutung einen exakt definierten Volumenstrom an Kupplungsfluid zuzuführen. Damit werden aufwendige Dimensionierungsabstimmungen der Nutungen zwar hinfällig, jedoch hat sich gezeigt, dass Überbrückungskupplungen mit derartigen Drosseldurchflüssen lediglich für eine partielle Durchströmung von Reibflächen sorgen und dadurch partielle Überhitzungen nicht mit hinreichender Sicherheit verhindert werden.

Der Erfindung liegt die Aufgabe zugrunde, eine als Zwei-Leitungs-System ausgebildete hydrodynamische Kopplungsvorrichtung derart auszugestalten, dass bei geringem technischen Aufwand eine Überbrückungskupplung derart in der Kopplungsvorrichtung angeordnet sein kann, dass sie zumindest im wesentlichen von einem hydrodynamischen Kreis umschlossen ist.

Diese Aufgabe wird erfindungsgemäß durch die im Anspruch 1 angegebenen Merkmale gelöst. Durch Anordnung der Überbrückungskupplung im hydrodynamischen Kreis bildet diese bekanntermaßen keine Dichtstelle zwischen Zonen unterschiedlicher Druckbeaufschlagung innerhalb des Kupplungsgehäuses aus, so dass sowohl an der Strömungseintrittsseite als auch an der Strömungsaustrittsseite der zumindest einen Reibfläche der Überbrückungskupplung jeweils gleicher Druck, nämlich derjenige des hydrodynamischen Kreises, anliegt. In bekannter Weise können also nachteilsfrei Nutungen beträchtlichen Querschnitts oder aber eine Vielzahl von Nutungen kleineren Querschnittes für eine beträchtliche und gleichmäßige Kühlung der Reibflächen Verwendung finden, da ein die zumindest eine Reibfläche passierender Volumenstrom auf diesem Weg den hydrodynamischen Kreis nicht verlassen kann. Statt dessen grenzen hydrodynamischer Kreis und Druckraum an einer von der Überbrückungskupplung entfernten Stelle aneinander, und zwar an der der Überbrückungskupplung zugewandten Seite des Kolbens, allerdings mit Radialabstand von der Überbrückungskupplung.

Hierbei bildet ein Gehäusedeckel des Kupplungsgehäuses eine erste Wandung des Druckraumes, der mit Achsversatz in Richtung zum Turbinenrad der Kolben und damit eine zweite Wandung zugeordnet ist. Der Kolben begrenzt also einerseits zusammen mit der ersten Wandung den Druckraum axial, und bewirkt andererseits eine für Kupplungsfluid undurchlässige Trennung des Druckraumes gegenüber dem hydrodynamischen Kreis. Folgerichtig schließt sich dieser hydrodynamischer Kreis an die vom Druckraum abgewandte Seite des Kolbens an.

Auch nach radial außen besteht eine Begrenzung des Druckraumes, und zwar durch eine anspruchsgemäße Abdichtung, die zwischen dem Gehäusedeckel und dem Kolben wirksam ist. Mit Vorzug ist hierbei zum einen am Gehäusedeckel eine dritte Wandung druckdicht befestigt, beispielsweise mittels einer Schweißnaht, und zum anderen ist am Kolben in einem der dritten Wandung entsprechenden radialen Erstreckungsbereich eine Umformung vorgesehen, die sich zumindest auf einem Teil im Wesentlichen parallel zur dritten Wandung erstreckt und bis auf Spaltbreite an dieselbe angenähert ist. Die Abdichtung kann so beispielsweise in einer Vertiefung der dritten Wandung aufgenommen sein und an der derselben zugewandten Seite der Umformung des Kolbens in Anlage kommen.

Da aufgrund dieser besonderen Ausgestaltung der hydrodynamischen Kopplungsvorrichtung zwischen Druckraum und hydrodynamischem Kreis eine für Kupplungsfluid durchlässige Verbindungsstelle fehlt, kann an der bestmöglich als Verbindungsstelle geeigneten Position im Kupplungsgehäuse eine Drosselstelle vorgesehen werden, die aufgrund ihrer Bemessung einen exakt definierten Austausch von Kupplungsfluid zwischen dem Druckraum und dem hydrodynamischen Kreis ermöglicht, und zwar in beiden Durchflussrichtungen. So ist bei eingerückter Überbrückungskupplung der hydrodynamische Kreis über eine erste Druckmittelleitung befüllbar, die mit Vorzug über dem hydrodynamischen Kreis zugeordnete, einen Freilauf des Leitrades axial begrenzende und mit Durchlässen ausgebildete Druckscheiben realisiert ist. Über diese Durchlässe in den Druckscheiben wird der hydrodynamische Kreis mit frischem Kupplungsfluid versorgt, während erhitztes oder verbrauchtes Kupplungsfluid mit einem exakt definierten Volumenstrom über die Drosselstelle in den Druckraum übertreten und das Kupplungsgehäuse über eine zweite Druckmittelleitung verlassen kann. Zum Ausrücken der Überbrückungskupplung muss nun lediglich der Volumenstrom des Kupplungsfluids über die zweite Druckmittelleitung in den Druckraum eingeleitet werden, in welchem sie sich - sofern die bereits erwähnte Abdichtung radial außen angeordnet ist - bis in diesen Radialbereich ausdehnen kann. Da während dieser Versorgung des Druckraums mit Kupplungsfluid das Kupplungsgehäuse üblicherweise eine Rotationsbewegung um seine Drehachse ausführt, wird die Bewegung des Druckmittels im Druckraum nach radial außen aufgrund der anliegenden Fliehkraft unterstützt. Dadurch kann ein gegebenes Ausrückerfordernis des Kolbens sehr rasch umgesetzt werden. Überdies werden sich hierbei die geringen Abmessungen des Druckraumes axial zwischen der ersten Wandung und dem Kolben vorteilhaft auswirken.

Mit Vorzug steht hierbei die erste Wandung über eine Zapfennabe des Kupplungsgehäuses und eine Drehsicherung in dreh- oder formschlüssiger Verbindung mit dem Kolben, so dass diese Wandung den Kolben an ihrer eigenen Rotationsbewegung um die Drehachse des Kupplungsgehäuses teilhaben lässt. Andererseits wird aber dem Kolben seine für die Ein- oder Ausrückbewegung notwendige Axialverlagerbarkeit durch Anbindung mittels einer Axialfederung vorzugsweise an die Drehsicherung gewährt.

Bei Betriebsweisen der hydrodynamischen Kopplungsvorrichtung, bei welchen größere Wärmemengen durch das im hydrodynamischen Kreis enthaltene Kupplungsfluid aus dem Kupplungsgehäuse herausgeführt werden müssen, kann es erforderlich sein, größere Mengen dieses Kupplungsfluids gegen frisches Kupplungsfluid auszutauschen. Da allerdings, wie bereits erläutert, die einzige Strömungsverbindung zwischen dem.Druckraum und dem hydrodynamischen Kreis durch die Drosselstelle realisiert ist, und deren Durchflussvolumen durch den gewünschten Volumenstrom insbesondere im hydrodynamischen Kreis vorgegeben wird, müssen andere Möglichkeiten geschaffen werden, um bei Bedarf größere Volumenströme an Kupplungsfluid aus dem hydrodynamischen Kreis herausführen zu können, und zwar idealerweise dann, wenn der hydrodynamische Kreis gerade über die erste Druckmittelleitung mit frischem Kupplungsfluid aufgefüllt wird, was bei der erfindungsgemäßen Gestaltung der Kupplungsvorrichtung bei ausgerückter Überbrückungskupplung der Fall ist. In diesem Betriebszustand ist der Druckraum mit gegenüber dem hydrodynamischen Kreis höheren Druck beaufschlagt, so dass ein mit Vorzug im Kolben und damit in der zweiten Wandung des Druckraumes angeordnetes Rückschlagventil durch den Überdruck im Druckraum geöffnet werden kann und dadurch wenigstens eine zusätzliche Durchflussöffnung freigegeben wird, die ansonsten aufgrund des Rückschlagventils für Kupplungsfluid unpassierbar ist. Sobald ein hinreichender Austausch des im hydrodynamischen Kreis enthaltenen Kupplungsfluids erfolgt ist, kann durch Druckerhöhung im hydrodynamischen Kreis über die erste Druckmittelleitung das Rückschlagventil umgesteuert und dadurch die wenigstens eine zusätzliche Aufnahmeöffnung wieder verschlossen werden. Mit Vorzug ist hierbei das Rückschlagventil als Pilzventil mit einem an die zweite Wandung anpreßbaren Verschlußdeckel ausgebildet, sowie mit einem Schaft, der in einer Aufnahmeöffnung der zweiten Wandung verliergesichert, aber axial verlagerbar aufgenommen ist und ebenso wie der Verschlussdeckel aus Kunststoff bestehen kann.

Wie bereits erläutert, gestaltet sich der Ausrückvorgang aufgrund des kompakten Druckraums sehr spontan, so dass eine Unterstützung durch eine Axialfederung normalerweise nicht erforderlich ist. Dennoch kann das Ausrücken mit Unterstützung durch eine Axialfederung von Vorteil sein, indem die Axialfederung für einen sehr raschen Abhub des Kolbens von der wenigstens einen Reibfläche der Überbrückungskupplung sorgt. Dadurch sind Schleppverluste im Bereich der Überbrückungskupplung weitgehend eliminierbar.

Die Erfindung ist nachfolgend anhand einer Zeichnung ausführlich erläutert. Es zeigt:
- Fig. 1: die obere Hälfte eines Längsschnittes durch einen hydrodynamischen Drehmomentwandler mit Überbrückungskupplung in Zwei-Leitungs-Ausführung;
- Fig. 2: eine Reibfläche der Überbrückungskupplung in Draufsicht
- Fig. 3: wie Fig. 2, aber mit anderer konstruktiver Ausbildung
- Fig. 4: ein Rückschlagventil in vergrößerter Herauszeichnung.

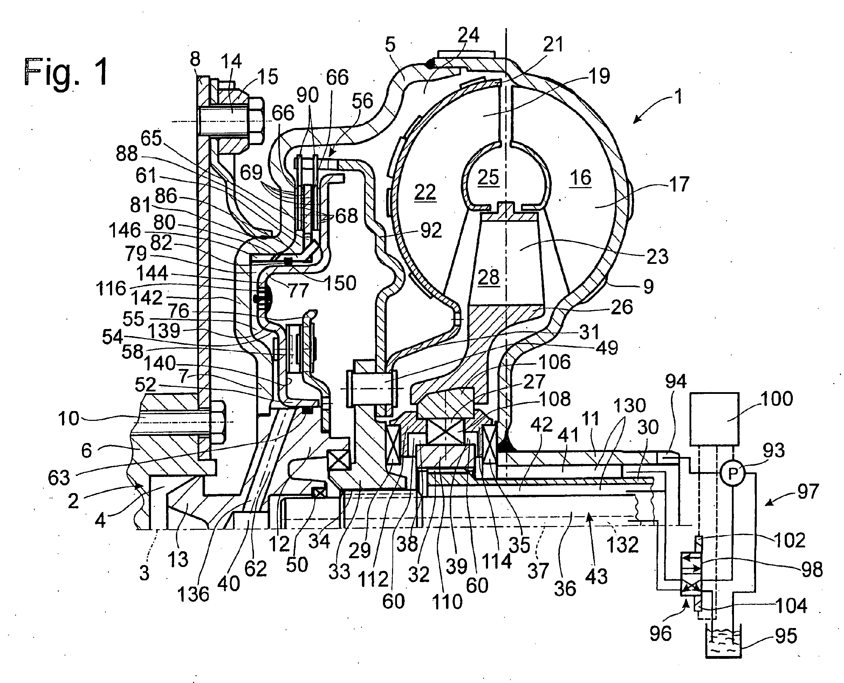

In Fig. 1 ist eine hydrodynamische Kopplungsvorrichtung 1 in Form eines hydrodynamischen Drehmomentwandlers dargestellt, der um eine Drehachse 3 Rotationsbewegungen auszuführen vermag. Der hydrodynamische Drehmomentwandler verfügt über ein Kupplungsgehäuse 5, das an seiner einem Antrieb 2, wie beispielsweise einer Brennkraftmaschine mit einer Kurbelwelle 6, zugewandten Seite einen Gehäusedeckel 7 aufweist, der fest mit einer-Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in einer Ausnehmung 4 der Kurbelwelle 6 zur antriebsseitigen Zentrierung des Kupplungsgehäuses 5 aufgenommen ist. Weiterhin verfügt der Gehäusedeckel 7 über eine Befestigungsaufnahme 15, die über eine Flexplatte 8 zur Befestigung des Kupplungsgehäuses 5 an der Kurbelwelle 6 dient, und zwar mittels Befestigungselementen 14, vorzugsweise in Form von Schrauben. Die Flexplatte 8 ihrerseits ist über Befestigungselemente 10, ebenfalls vorzugsweise in Form von Schrauben, an der Kurbelwelle 6 befestigt.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Das letztgenannte verfügt über an einer Leitradnabe 26 vorgesehene Leitradschaufeln 28 und bildet gemeinsam mit dem Pumpenrad 17 und dem Turbinenrad 19 einen hydrodynamischen Kreis 24, der einen Innentorus 25 umschließt.

Das Leitrad 23 ist über seine Leitradnabe 26 auf einem Außenkörper 106 eines Freilaufes 27 angeordnet, der über einen Wälzelemententeil 108 auf einem Innenkörper 110 angeordnet ist. Der Außenkörper 106 zentriert über eine antriebsseitige Druckscheibe 112 sowie über eine abtriebsseitige Druckscheibe 114 den Innenkörper 110, und stützt sich antriebsseitig über die antriebsseitige Druckscheibe 112, eine antriebsseitige Axiallagerung 29, eine Turbinenradnabe 33 und eine Lagerung an der Zapfennabe 12 axial ab, abtriebsseitig dagegen über die abtriebsseitige Druckscheibe 114 und eine abtriebsseitige Axiallagerung 35 an der Pumpenradnabe 11.

Das Leitrad 23 steht über den Innenkörper 110 seines Freilaufes 27 in drehfester, aber axial relativ verschiebbarer Verzahnung 32 mit einer Stützwelle 30, die unter Belassung eines im Wesentlichen ringförmigen, radial äußeren Durchflußkanals 41 radial innerhalb der Pumpenradnabe 11 angeordnet ist. Die als Hohlwelle ausgebildete Stützwelle 30 ihrerseits umschließt unter Belassung eines im Wesentlichen ringförmigen, radial inneren Durchflußkanals 42 eine als Abtrieb 43 wirksame Getriebeeingangswelle 36, die mit einer Mittenbohrung 37 zum Durchgang von Kupplungsfluid versehen ist. Während die beiden Durchflußkanäle 41, 42 als erster Strömungsweg 130 vorgesehen sind, dient die Mittenbohrung 37 als zweiter Strömungsweg 132. Die Getriebeeingangswelle 36 nimmt über eine Verzahnung 34 die bereits erwähnte Turbinenradnabe 33 drehfest, aber axial verschiebbar auf und ist durch eine Dichtung 50 gegenüber der Zapfennabe 12 abgedichtet. Die Turbinenradnabe 33 ist mittels Durchgangsnieten 49 sowohl mit einem Turbinenradfuß 31 des Turbinenrades 19 als auch mit einem Außenlamellenträger 92 einer Überbrückungskupplung 56 drehfest verbunden.

Die bereits erwähnten Durchflußkanäle 41, 42 führen über als erste Druckmittelleitung 60 dienende Durchlässe 38, 39 der Druckscheiben 112, 114 in den hydrodynamischen Kreis 24. Die Mittenbohrung 37 führt dagegen zu einem Übergangsraum 40, von dem aus zumindest ein in der Zapfennabe 12 mit einer Radialkomponente verlaufender Kanal 136 ausgeht, der als zweite Druckmittelleitung 62 dient. Diese mündet in einen Druckraum 55 axial zwischen dem Gehäusedeckel 7 und einem Kolben 54 der Überbrückungskupplung 56, so dass der Gehäusedeckel 7 als erste Wandung 142 des Druckraumes 55 und der Kolben 54 mit seiner dem Druckraum 55 zugewandten Seite 139 als zweite Wandung 144 für den Druckraum 55 vorgesehen ist. Die vom Druckraum 55 abgewandte Seite des Kolbens 54 grenzt an den hydrodynamischen Kreis 24.

Im radial inneren Bereich des Kolbens 54 kann dieser über eine Axialfederung 58 in Form von Tangentialblattfedern mittels nicht gezeigter Nietverbindungen an einer Drehsicherung 76 aufgenommen sein, die an der Zapfennabe 12 des Kupplungsgehäuses 5 befestigt ist.

Der Druckraum 55 ist in seinem radialen Erstreckungsbereich am radial äußeren Ende 79 durch einen als dritte Wandung 146 des Druckraumes 55 dienenden Innenlamellenträger 86 der Überbrückungskupplung 56 begrenzt, der druckdicht am Gehäusedeckel 7 befestigt ist, beispielsweise durch Verschweißung. Im Wesentlichen parallel zum Innenlamellenträger 86 verläuft eine Umformung im Kolben 54, die sich in Richtung zum hydrodynamischen Kreis erstreckt und radial bis auf Spaltbreite an den Innenlamellenträger 86 angenähert ist. In eine Vertiefung 150 des Innenlamellenträgers 86 ist, an dessen der Umformung zugewandter Seite, eine Abdichtung 82 eingesetzt, die an der Umformung in Anlage kommt und damit den Druckraum 55 gegenüber dem hydrodynamischen Kreis 24 zumindest im Wesentlichen druckdicht macht. Des weiteren verfügt der Innenlamellenträger 86 über eine Drosselstelle 80 in Form zumindest einer Durchgangsöffnung 81, welche den Druckraum 55 mit dem hydrodynamischen Kreis 24 verbindet.

Der Kolben 54 kann im radial mittleren Bereich 77 seiner radialen Erstreckung mit einem Rückschlagventil 116 ausgebildet sein, auf dessen konstruktive Ausführung, Wirkungsweise und Funktion an anderer Stelle ausführlich eingegangen wird.

Entsprechend der Beaufschlagung der ersten Druckmittelleitung 60 oder der zweiten Druckmittelleitung 62 und damit in Abhängigkeit von den Druckverhältnissen im hydrodynamischen Kreis 24 sowie im Druckraum 55 ist der Kolben 54 in Axialrichtung zwischen zwei unterschiedlichen Grenzstellungen bewegbar, auf die nachfolgend noch eingegangen wird. Der Kolben 54 ist mittels eines auf der Zapfennabe 12 gelagerten Kolbenfußes 52 axial verschiebbar, wobei eine in der Zapfennabe 12 eingelassene Kolbendichtung 63 ihre Abdichtfunktion gegenüber dem Kolbenfuß 52 wahrnimmt.

Axial zwischen dem Gehäusedeckel 7 und dem Kolben 54 ist, im radial äußeren Bereich des letztgenannten, eine mit dem Innenlamellenträger 86 mittels einer Verzahnung 88 drehfeste radial innere Lamelle 65 angeordnet, an der zu beiden Seiten radial äußere Lamellen 66 vorgesehen sind, die über jeweils eine Verzahnung 90 drehfest an dem Außenlamellenträger 92 aufgenommen sind. Die radial äußeren Lamellen 66 verfügen jeweils über beidseitige Reibbeläge 68, wobei durch die beiden jeweils der radial inneren Lamelle 65 zugewandten Reibbeläge 68 in Verbindung mit je einer an der radial inneren Lamelle 65 vorgesehenen Reibzone je ein Reibbereich 69 bereitgestellt wird, während durch einen der beiden von der radial inneren Lamelle 65 abgewandten Reibbeläge 68 ein Reibbereich 69 mit einer Reibzone am Gehäusedeckel 7 und durch den anderen dieser beiden Reibbeläge 68 ein Reibbereich 69 mit einer Reibzone am Kolben 54 gebildet wird.

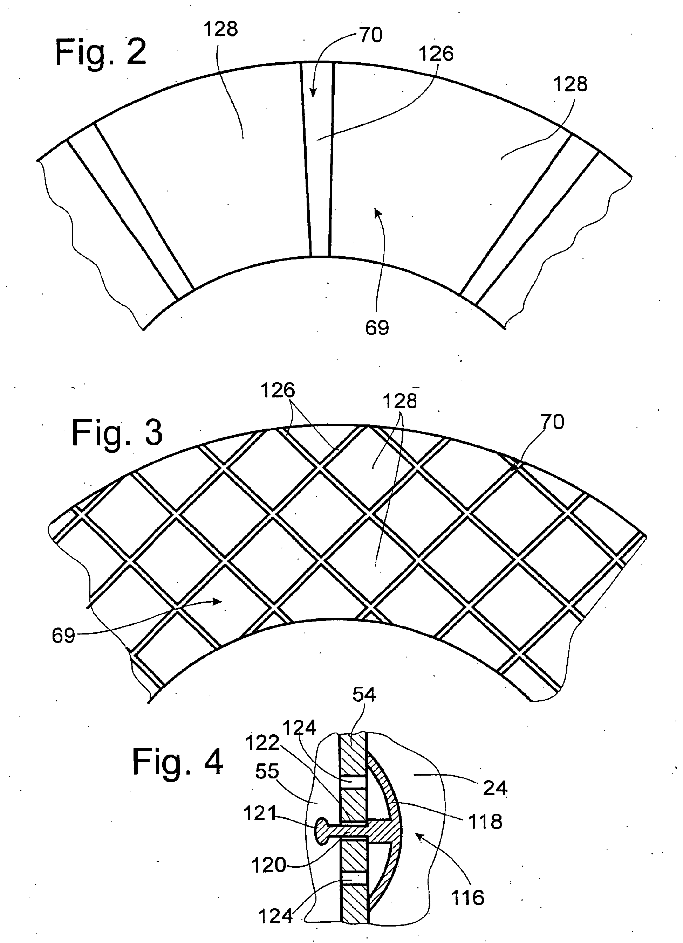

Die einzelnen Reibbereiche 69 werden aktiviert, sobald die Reibbeläge 68 mit der jeweils zugeordneten Reibzone in Wirkverbindung treten, was durch Einrücken des Kolbens 54 und damit der Überbrückungskupplung 56 geschieht. Das Einrücken des Kolbens 54 ist beendet, wenn der Kolben 54 die größtmögliche Axialannäherung innerhalb seines axialen Bewegungsbereichs an den Gehäusedeckel 7 erfahren hat. Für den Einrückvorgang wird im hydrodynamischen Kreis 24 ein höherer Druck als im Druckraum 55 aufgebaut. Da ein die Lamellen 65, 66 aufnehmender Kupplungsraum 61 mit seinem radial inneren Teil über die Überbrückungskupplung 56 mit dem hydrodynamischen Kreis 24 in Verbindung steht, mit seinem radial äußeren Teil dagegen direkt, und die Überbrückungskupplung 56, wie anhand der Fig. 2 oder 3 erkennbar ist, - im Bereich der Reibbeläge 68 über Nutungen 70 mit einer Größe oder in einer Vielzahl verfügt, die einen vergleichsweise hohen Volumenstrom an Kupplungsfluid passieren lassen, ist der Kupplungsraum 61 als Teil des hydrodynamischen Kreises 24 zu betrachten.

Umgekehrt werden die einzelnen Reibbereiche 69 deaktiviert, sobald die Wirkverbindung der Reibbeläge 68 mit der jeweils zugeordneten Reibzone aufgehoben wird, was durch Ausrücken des Kolbens 54 und damit der Überbrückungskupplung 56 erfolgt. Das Ausrücken des Kolbens 54 ist beendet, wenn der Kolben 54 die größtmögliche Axialentfernung innerhalb seines axialen Bewegungsbereichs weg vom Gehäusedeckel 7 erfahren hat. Für den Ausrückvorgang wird im Druckraum 55 ein höherer Druck als im hydrodynamischen Kreis 24 und damit im Kupplungsraum 61 erzeugt.

Das Ein- oder Ausrücken des Kolbens 54 der Überbrückungskupplung 56 wird wie folgt vorgenommen:

Die bereits erwähnten Durchflußkanäle 41, 42 radial zwischen der Pumpenradnabe 11 und der Stützwelle 30 einerseits und zwischen der letztgenannten und der Getriebeeingangswelle 36 andererseits dient über die ersten Druckmittelleitungen 60 zur Versorgung des hydrodynamischen Kreises 24 über die Durchlässe 38, 39 der Druckscheiben 112, 114 mit Kupplungsfluid, während die Mittenbohrung 37 in der Getriebeeingangswelle 36 über den Übergangraum 40 und die zweiten Druckmittelleitungen 62 zur Versorgung des Druckraumes 55 mit Kupplungsfluid dient. Zur Gewährleistung der jeweils korrekten Versorgung ist ein in Fig. 1 eingezeichneter Druckkreis 97 notwendig, der über eine Druckquelle 93 verfügt, deren Antrieb in üblicher Weise durch einen Antriebsnocken 94 an der Pumpenradnabe 11 erfolgt, während deren Saugseite S mit einem Fluidmittelvorrat 95 und deren Druckseite D entweder mit den Durchflußkanälen 41, 42 verbunden werden kann, oder aber mit der Mittenbohrung 37. Die jeweilige Versorgung der Durchflußkanäle 41, 42 oder der Mittenbohrung 37 mit Kupplungsfluid erfolgt entsprechend den Vorgaben einer Steuervorrichtung 100, die sowohl mit einer im Druckkreis 97 enthaltenen Umschaltvorrichtung 96 in Form eines Umschaltventils 98 als auch mit der Druckquelle 93 in Wirkverbindung steht. Mit Vorzug ist hierbei das Umschaltventil 98 als 4/2-Wegeventil ausgebildet, mit Betätigung durch Elektromagnete 102, 104, die entsprechend der Ansteuerung durch die Steuervorrichtung 100 für eine zugeordnete Auslenkung der Umschaltvorrichtung 96 sorgen.

Zum Einrücken des Kolbens 54 in die in Fig. 1 gezeigte Position ist die Umschaltvorrichtung 96 durch mittels der Steuervorrichtung 100 vorgenommener Ansteuerung des Elektromagneten 102 derart beaufschlagt, dass dieser das Umschaltventil 88 aus der in Fig. 1 eingezeichneten Position in eine zweite Position verschoben hat, in welcher die Druckseite D der Druckquelle 93 mit den Durchflußkanälen 41, 42 verbunden ist. Dort nimmt folglich der Druck zu, während er gleichzeitig in der Mittenbohrung 37 der Getriebeeingangswelle 36, die nun über das Umschaltventil 98 mit dem Fluidmittelvorrat 95 verbunden ist, absinkt.

Das über die Durchflußkanäle 41, 42 eingeströmte Kupplungsfluid gelangt über die erste Druckmittelleitung 60 in den hydrodynamischen Kreis 24 und beaufschlagt dort den Kolben 54 in Richtung zum Druckraum 55, dessen Entleerung über die zweite Druckmittelleitung 62 erfolgt. Aufgrund des sich dadurch aufbauenden Überdruckes im hydrodynamischen Kreis 24 gegenüber dem Druckraum 55 wird der Kolben 54 an seiner abtriebsseitigen Kolbenwand 140 belastet, wodurch eine Verlagerungsbewegung des Kolbens 54 in Richtung zum Gehäusedeckel 7 ausgelöst wird. Allerdings endet der Beaufschlagungsbereich für den Kolben 54 im radialen Erstreckungsbereich der Abdichtung 82, da radial außerhalb derselben der Kupplungsraum 61 beginnt, in welchem vergleichbare Druckverhältnisse wie im hydrodynamischen Kreis 24 vorliegen und der daher als Teil des hydrodynamischen Kreises 24 anzusehen ist.

Das Durchströmen der Überbrückungskupplung 56 durch Kupplungsfluid wird selbst bei fortschreitendem Einrückvorgang des Kolbens 54 und auch bei völlig eingerücktem Kolben 54 nur unwesentlich behindert, da gemäß Fig. 2 oder 3 zwischen je zwei Reibbelagsegmenten 128 im Bereich der Reibflächen 69 eine Nutung 70 vorgesehen ist, die einen hohen Volumenstrom des Kupplungsfluids durch die Überbrückungskupplung 56 ermöglicht, und dadurch eine effiziente Kühlung der Reibflächen 69 erlaubt. Diese Nutung 70 ist hierfür entweder gemäß Fig. 2 mit breiten Nutungskanälen 126 zwischen je zwei Reibsegmenten 128 der Reibfläche 69 ausgebildet, oder aber gemäß Fig. 3 mit einer Vielzahl von Nutungskanälen 126 zwischen den jeweiligen Reibsegmenten 128.

Eine derart durchflußintensive Ausgestaltung der Reibflächen 69 ist bei einem als Zwei-Leitungs-System ausgebildeten hydrodynamischen Drehmomentwandler, bei welchem eine erste Druckmittelleitung 60 den hydrodynamischen Kreis 24 und eine zweite Druckmittelleitung 62 den Druckraum 55 mit Kupplungsfluid versorgen kann, nur deshalb möglich, weil, abweichend von der üblichen Ausgestaltung derartiger Zwei-Leitungs-Systeme, die Überbrückungskupplung 56 bei eingerücktem Kolben 54 allein zur Übertragung von Drehmoment zwischen Antrieb 2 und Abtrieb 43 unter Umgehung des hydrodynamischen Kreises 24 dient, und nicht die zusätzliche Funktion einer Abdichtung des hydrodynamischen Kreises 24 gegenüber dem Druckraum 55 übernehmen muß. Dies liegt daran, dass die Überbrückungskupplung 56 in Strömungsrichtung des Kupplungsfluids in dem als Teil des hydrodynamischen Kreises 24 anzusehenden Kupplungsraum 61 angeordnet ist, so dass über die Überbrückungskupplung 56 abströmendes Kupplungsfluid den hydrodynamischen Kreis 24 nur mit demjenigen Volumenstrom verlassen kann, der durch die Drosselstelle 80 vorgegeben ist. Die Isolation des hydrodynamischen Kreises 24 gegenüber dem Druckraum 55 erfolgt unterdessen durch den Innenlamellenträger 86 in Verbindung mit der Abdichtung 82. Bei Wunsch eines stärkeren Austausches von Kupplungsfluid kann die Drosselstelle 80 allerdings durch die Durchflußöffnung 124 des Rückschlagventils 116 ergänzt werden kann, was nachfolgend ausführlich erläutert wird.

Um den Kolben 54 auszurücken, wird die Umschaltvorrichtung 96 durch mittels der Steuervorrichtung 100 vorgenommener Ansteuerung des Elektromagneten 104 derart beaufschlagt, dass dieser das Umschaltventil 88 in die in Fig. 1 eingezeichnete Position bewegt, in welcher die Druckseite D der Druckquelle 93 mit der Mittenbohrung 37 der Getriebeeingangswelle 36 verbunden ist. Dort nimmt folglich der Druck zu, während er gleichzeitig in den Durchflußkanälen 41, 42, die nun über das Umschaltventil 98 mit dem Fluidmittelvorrat 95 verbunden sind, absinkt.

Aufgrund dieser Druck- und Anschlußsituation wird Kupplungsfluid vom Fluidmittelvorrat 95 über die Mittenbohrung 37 der Getriebeeingangswelle 36 und die zweite Druckmittelleitung 62 in den Druckraum 55 geleitet. Unterstützt durch die Rotation des Kupplungsgehäuses 5 um die Drehachse 3 drängt das Kupplungsfluid dort nach radial außen, wo ihm aufgrund der Abdichtung 82 eine Weiterbewegung lediglich im Rahmen eines geringen Volumenstromes durch die Drosselstelle 80 möglich ist. Der Druckraum 55 wird wegen seiner kompakten Abmessungen rasch befüllt, so dass sich sehr zügig ein Überdruck gegenüber dem hydrodynamischen Kreis 24 aufbaut.

Bei über die Drosselstelle 80 weiterhin in den Kupplungsraum 61 nachströmendem Kupplungsfluid passiert dieses infolge des zügig ausrückenden Kolbens 54 den Bereich der Überbrückungskupplung 56 problemlos und gelangt als frisches Kupplungsfluid in den hydrodynamischen Kreis 24. Unter Wahrung der Druckbedingungen im hydrodynamischen Kreis 24 wird hierdurch erhitzes Kupplungsfluid über die erste Druckmittelleitung 60 in die Durchflußkanäle 41, 42 und von diesen in den Fluidmittelvorrat 95 entleert.

Sofern die den Kolben 54 an der Zapfennabe 12 und damit am Kupplungsgehäuse 5 anbindende Axialfederung 58 über eine Wirkrichtung verfügt, in welcher sie den Kolben 54 vom Gehäusedeckel 7 wegzieht, wird die Ausrückbewegung des Kolbens 54 durch die Axialfederung 58 unterstützt und dadurch weiter beschleunigt, so dass Schleppmomente an den Reibbereichen 69 auf ein Minimum reduziert sind.

Soll bei ausgerücktem Kolben 54 jeweils ein erheblicher Austausch an Kupplungsfluid im hydrodynamischen Kreis 24 vorgenommen werden, besteht die Möglichkeit, im Kolben 54 ein Rückschlagventil 116 einzusetzen. Dieses kann gemäß Fig. 4 als pilzförmiges Kunststoffteil ausgebildet sein mit einem Verschlußdeckel 118 und einem daran angeformten, im Wesentlichen zylinderförmigen Schaft 120, der eine Aufnahmeöffnung 122 des Kolbens 54 axial durchdringt und in dieser Aufnahmeöffnung 122 mittels einer Verliersicherung 121 derart gehalten ist, dass er zwar axial verlagerbar, gleichzeitig aber gegenüber dem Kolben 54 unlösbar gehalten ist. Dicht benachbart der Aufnahmeöffnung 122 für den Schaft 120 ist der Kolben 54 von wenigstens einer Durchlaßöffnung 124 durchdrungen, über welche der Verschlußdeckel 118 bei einem Überdruck im Druckraum 55 gegenüber dem hydrodynamischen Kreis 24 von der Seite des Druckraumes 55 aus beaufschlagbar ist. Dadurch wird über die Durchlaßöffnung 124 ein Abhub des Verschlußdeckels 118 von der gegenüber liegenden Seite des Kolbens 54 ausgelöst, so dass ein die Drosselstelle 80 ergänzender Abflußweg für Kupplungsfluid durch die Durchlaßöffnung 124 frei gegeben wird. Je nach von der Druckdifferenz abhängiger Öffnungsweite des Verschlußdeckels 118 sowie in Abhängigkeit von der Bemessung von dessen Durchmesser und der Anzahl und/oder Größe von Durchlaßöffnungen 124 kann ein entsprechender Durchsatz von Kupplungsfluid aus dem Druckraum 55 in den hydrodynamischen Kreis 24 und von diesem in den Fluidmittelvorrat 95 erzeugt werden.

### Bezugszeichenliste

- 1.: hydrodyn. Kopplungsvorrichtung
- 2.: Antrieb
- 3.: Drehachse
- 4.: Ausnehmung
- 5.: Kupplungsgehäuse
- 6.: Kurbelwelle
- 7.: Gehäusedeckel
- 8.: Flexplatte
- 9.: Pumpenradschale
- 10.: Befestigungselemente
- 11.: Pumpenradnabe
- 12.: Zapfennabe
- 13.: Lagerzapfen
- 14.: Befestigungselemente
- 15.: Befestigungsaufnahme
- 16: Pumpenradschaufeln
- 17.: Pumpenrad
- 19.: Turbinenrad
- 21.: Turbinenradschale
- 22: Turbinenradschaufeln
- 23.: Leitrad
- 24.: hydrodynamischer Kreis
- 25.: Innentorus
- 26.: Leitradnabe
- 27.: Freilauf
- 28: Leitradschaufeln
- 29.: antriebsseitige Axiallagerung
- 30.: Stützwelle
- 31.: Turbinenradfuss
- 32: Verzahnung
- 33.: Turbinenradnabe
- 34: Verzahnung
- 35.: abtriebsseitige Axiallagerung
- 36.: Getriebeeingangswelle
- 37.: Mittenbohrung
- 38.: Durchlaß
- 39.: Durchlaß
- 40.: Übergangsraum
- 41.: Durchflußkanal
- 42.: Durchflußkanal
- 43.: Abtrieb
- 49.: Durchgangsniete
- 50.: Dichtung
- 52.: Kolbenfuß
- 54.: Kolben
- 55.: Druckraum
- 56.: Überbrückungskupplung
- 58.: Axialfederung
- 60.: erste Druckmittelleitung
- 61.: Kupplungsraum
- 62.: zweite Druckmittelleitung
- 63.: Kolbendichtung
- 65.: Lamelle
- 66.: Lamelle
- 68.: Reibbelag
- 69.: Reibbereich
- 70.: Nutungen
- 76.: Drehsicherung
- 77.: radial mittlerer Bereich
- 79.: radial äußeres Ende
- 80.: Drosselstelle
- 81.: Durchgangsöffnung
- 82.: Abdichtung
- 86.: Innenlamellenträger
- 88.: Verzahnung
- 90.: Verzahnung
- 92.: Außenlamellenträger
- 93.: Druckquelle
- 94.: Antriebsnocke
- 95.: Fluidmittelvorrat
- 96.: Umschaltvorrichtung
- 97.: Druckkreis
- 98.: Umschaltventil
- 100.: Steuervorrichtung
- 102.: Elektromagnet
- 104.: Elektromagnet
- 106.: Außenkörper
- 108.: Wälzelemententeil
- 110.: Innenkörper
- 112.: antriebsseitige Druckscheibe
- 114.: abtriebsseitige Druckscheibe
- 116.: Rückschlagventil
- 118.: Verschlußdeckel
- 120.: Schaft
- 121.: Verliersicherung
- 122.: Aufnahmeöffnung
- 124.: Durchflußöffnung
- 126.: Nutungskanäle
- 128.: Reibsegmente
- 130.: erster Strömungsweg
- 132.: zweiter Strömungsweg
- 136.: Kanal
- 139.: Seite des Kolbens
- 140.: Seite des Kolbens
- 142.: erste Wandung des Druckraums
- 144.: zweite Wandung des Druckraums
- 146.: dritte Wandung des Druckraums
- 150.: Vertiefung

## Patentansprüche

1. Hydrodynamische Kopplungsvorrichtung(1), aufweisend zumindest ein mit einem Antrieb (2) über ein Kupplungsgehäuse (5) verbundenes Pumpenrad (177) und ein mit einem Abtrieb (43) verbundenes Turbinenrad (19) zur Bildung eines hydrodynamischen Kreises (24), eine Überbrückungskupplung(56) mit wenigstens einem Kolben (54) und zumindest einer zwischen diesem und einer benachbarten Abstützung wirksamen Reibfläche (69) zur Verbindung des Antriebs (2) mit dem Abtrieb (43) unter Umgehung des hydrodynamischen Kreises (24), und einen Druckkreis (97) in Form eines Zwei-Leitungs-Systems mit einer ersten Druckmittelleitung (60) zur Versorgung des hydrodynamischen Kreises (24) mit Kupplungsfluid und mit einer zweiten Druckmittelleitung (62) zur Versorgung eines dem Kolben (54) zugeordneten Druckraumes (55) mit Kupplungsfluid, wobei die Überbrückungskupplung (56) zumindest im Wesentlichen vom hydrodynamischen Kreis (24) umschlossen ist, dem wenigstens eine einen Austausch von Kupplungsfluid mit dem Druckraum (55) zumindest reduzierende Abdichtung (82) sowie wenigstens eine einen definierten Austausch von Kupplungsfluid mit dem Druckraum (55) gewährende Drosselstelle (80) zugeordnet ist,
**dadurch gekennzeichnet,**
**dass** ein Gehäusedeckel (7) des Kupplungsgehäuses (5) als erste Wandung (142) des Druckraumes (55) und der Kolben (54) mit seiner der wenigstens einen Reibfläche (69) der Überbrückungskupplung (56) zugewandten Seite (139) als zweite Wandung (144) des Druckraumes (55) wirksam ist, der an seiner radialen Außenseite über die zwischen den beiden Wandungen (142, 144) wirksame Abdichtung (82) gegenüber dem hydrodynamischen Kreis (24) verfügt.

2. Hydrodynamische Kopplungsvorrichtung nach Anspruch 1,
**dadurch gekennzeichnet,**
**dass** die Drosselstelle (80) entsprechend vorbestimmter Druck- und Befüllbedingungen zumindest im hydrodynamischen Kreis (24) bemessen ist.

3. Hydrodynamische Kopplungsvorrichtung nach Anspruch 1 oder 2 mit Strömungswegen (130, 1.32), die jeweils mit einem einer Druckquelle(93) zugeordneten Fluidmittelvorrat (95) verbunden sind und von denen zumindest ein erster (130) radial zwischen einer dem Pumpenrad (17) zugeordneten Pumpenradnabe (11) und dem Abtrieb (43) und wenigstens ein zweiter (132) im Erstreckungsbereich des Abtriebs (43) vorgesehen ist, und mit Druckmittelleitungen (60, 62), von denen die erste (60) zur Herstellung einer Verbindung zwischen dem Fluidmittelvorrat (95) und dem hydrodynamischen Kreis (24) und die zweite (62) zur Herstellung einer Verbindung zwischen dem Fluidmittelvorrat (95) und dem Druckraum (55) vorgesehen ist,
**dadurch gekennzeichnet,**
**dass** der erste Strömungsweg (130) und die erste Druckmittelleitung (60) den Fluidmittelvorrat (95) mit dem hydrodynamischen Kreis (24) und der zweite Strömungsweg (132) und die zweite Druckmittelleitung (62) den Fluidmittelvorrat (95) mit dem Druckraum (55) verbinden.

4. Hydrodynamische Kopplungsvorrichtung nach einem der Ansprüche 1 bis 3 mit einer den Abtrieb (43) bildenden Getriebeeingangswelle (36), einer dieselbe radial umschließenden Stützwelle (30) für einen Freilauf (27) und einer die Stützwelle (30) wiederum radial umschließenden Pumpenradnabe (11), wobei die Pumpenradnabe (11) gemeinsam mit der Stützwelle (30) einen im Wesentlichen ringförmigen radial äußeren Durchflußkanal (41) und die Stützwelle (30) gemeinsam mit der Getriebeeingangswelle (36) einen im Wesentlichen ringförmigen radial inneren Durchflußkanal (42) und die Getriebeeingangswelle (36) eine Mittenbohrung (37) radial begrenzt,
**dadurch gekennzeichnet,**
**dass** zumindest einer der beiden mit Radialversatz zueinander angeordneten Durchflußkanälen (41, 42) als erster Strömungsweg (130) und die Mittenbohrung (37) als zweiter Strömungsweg (132) dient.

5. Hydrodynamische Kopplungsvorrichtung nach Anspruch 1,
**dadurch gekennzeichnet,**
**dass** die Abdichtung (82) an einer mit der ersten Wandung (142) druckdicht verbundenen dritten Wandung (146) aufgenommen ist und sich im Wesentlichen radial in Richtung zur zweiten Wandung (144) und damit zum Kolben (54) erstreckt.

6. Hydrodynamische Kopplungsvorrichtung nach Anspruch 5,
**dadurch gekennzeichnet,**
**dass** der Kolben (54) vorzugsweise im radial mittleren Bereich (77) über eine Umformung verfügt, die sich im Wesentlichen in Richtung zum hydrodynamischen Kreis (24) erstreckt und mit ihrer der dritten Wandung (146) zugewandten Seite als Anlagestelle für die Abdichtung (82) dient.

7. Hydrodynamische Kopplungsvorrichtung nach Anspruch 5 oder 6,
**dadurch gekennzeichnet,**
**dass** die dritte Wandung (146) des Druckraums (55) zur Aufnahme der zwischen hydrodynamischem Kreis (24) und Druckraum (55) wirksamen Drosselstelle (80) dient.

8. Hydrodynamische Kopplungsvorrichtung nach einem der Ansprüche 5 bis 7,
**dadurch gekennzeichnet,**
**dass** die Drosselstelle (80) unmittelbar benachbart zur Abdichtung (82) in der dritten Wandung (146) vorgesehen ist.

9. Hydrodynamische Kopplungsvorrichtung nach einem der Ansprüche 5 bis 8,
**dadurch gekennzeichnet,**
**dass** die Drosselstelle (80) durch zumindest, eine in der dritten Wandung (146) vorgesehene Durchgangsöffnung (81) gebildet ist.

10. Hydrodynamische Kopplungsvorrichtung nach einem der Ansprüche 1 bis 9,
**dadurch gekennzeichnet,**
**dass** mittels einer Axialfederung (58) eine axiale Vorbelastung des Kolbens (54) gegenüber der Reibfläche (69) der Überbrückungskupplung (56) vorgenommen wird.

11. Hydrodynamische Kopplungsvorrichtung nach Anspruch 10,
**dadurch gekennzeichnet,**
**dass** der Kolben (54) durch die Axialfederung (58) mit einer von der Reibfläche (69) fortweisenden Vorbelastung beaufschlagbar ist.

12. Hydrodynamische Kopplungsvorrichtung nach einem der Ansprüche 1 bis 11,
**dadurch gekennzeichnet,**
**dass** die zweite Druckmittelleitung (62) durch zumindest einen mit wenigstens einer Radialkomponente verlaufenden Kanal (136) mit dem Druckraum (55) verbunden ist.

13. Hydrodynamische Kopplungsvorrichtung nach einem der Ansprüche 5 bis 9 mit einer zumindest über eine Lamelle (65, 66) verfügenden Überbrückungskupplung (56),
**dadurch gekennzeichnet,**
**dass** die dritte Wandung (146) des Druckraumes (55) durch einen die Lamelle (65) drehfest an das Kupplungsgehäuse (5) anbindenden Lamellenträger (86) gebildet ist.

14. Hydrodynamische Kopplungsvorrichtung nach einem der Ansprüche 1 bis 13,
**dadurch gekennzeichnet,**
**dass** in dem als zweite Wandung (144) zwischen dem Druckraum (55) und dem hydrodynamischen Kreis (24) dienenden Kolben (54) ein Rückschlagventil (116) aufgenommen ist, das bei einem Überdruck im Druckraum (55) einen Strömungsdurchfluß freigibt, bei einem Überdruck im hydrodynamischen Kreis (24) dagegen einen Durchfluß von Kupplungsfluid unterbindet.

15. Hydrodynamische Kopplungsvorrichtung nach Anspruch 14,
**dadurch gekennzeichnet,**
**dass** das Rückschlagventil (116) über einen in einer Aufnahmeöffnung (122) des Kolbens (54) vorgesehenen Schaft (120) axial verlagerbar positioniert ist, und zumindest eine Durchflußöffnung (124) im Kolben (54) durch einen Verschlußdeckel (118) in Schließposition überdeckt, in Öffnungsposition dagegen freigibt:

16. Hydrodynamische Kopplungsvorrichtung nach Anspruch 14 oder 15,
**dadurch gekennzeichnet,**
**dass** das Rückschlagventil (116) aus einem druckbelastbaren und thermisch belastbaren Kunststoff besteht.

17. Hydrodynamische Kopplungsvorrichtung nach einem der Ansprüche 1 bis 16 mit einer Überbrückungskupplung(56), die zumindest eine mit einer Nutung (70) versehene Reibfläche (69) aufweist,
**dadurch gekennzeichnet,**
**dass** die Nutung (70) über zumindest einen volumenstarken Nutungskanal (126) zwischen wenigstens zwei Reibsegmenten (128) verfügt.

18. Hydrodynamische Kopplungsvorrichtung nach Anspruch 17,
**dadurch gekennzeichnet,**
**dass** die Nutung (70) über eine Vielzahl von Nutungskanälen (126) zwischen Reibsegmenten (128) verfügt.

19. Hydrodynamische Kopplungsvorrichtung nach einem der Ansprüche 1 bis 18,
**dadurch gekennzeichnet**,
der Kolben (54) mittels einer Axialfederung (58) drehfest, aber axial verlagerbar an eine mit dem Kupplungsgehäuse (5) drehfeste Drehsicherung (76) angebunden ist.

20. Verfahren zur Durchströmung einer hydrodynamischen Kopplungsvorrichtung (1) gemäß Anspruch 3 entlang des folgenden Durchflußweges:
■ für eine Annäherung des Kolbens (54) an die Reibfläche (69) zum Einrücken der Überbrückungskupplung (56), beginnend mit der Entnahme von Kupplungsfluid aus dem der Druckquelle (93) zugeordneten Fluidmittelvorrat (95) und sich fortsetzend mit der Weiterleitung des Kupplungsfluids über den ersten Strömungsweg (130) und die erste Druckmittelleitung (60) sowie den hydrodynamischen Kreis (24) unter Durchströmung der Reibfläche (69) der Überbrückungskupplung (56), um vom hydrodynamischen Kreis (24) aus nach Passage der Drosselstelle (80) in den Druckraum (55) zu münden, von dem aus das Kupplungsfluid über die zweite Druckmittelleitung (62) und den zweiten Strömungsweg (132) in den Fluidmittelvorrat (95) zurückgeführt wird, oder
■ für eine Entfernung des Kolbens (54) von der Reibfläche (69) zum Ausrücken der Überbrückungskupplung (56), beginnend mit der Entnahme von Kupplungsfluid aus dem Fluidmittelvorrat (95) und sich fortsetzend mit der Weiterleitung des Kupplungsfluids über den zweiten Strömungsweg (132) und die zweite Druckmittelleitung (62) bis zum Erreichen des Druckraums (55), um von dort nach Passage der Drosselstelle (80) in den hydrodynamischen Kreis (24) zu gelangen, um von dort aus, nach Passage der Reibfläche (69) der Überbrückungskupplung (56), über die erste Druckmittelleitung (60) und den ersten Strömungsweg (130) in den Fluidmittelvorrat (95) zurück zu gelangen.

21. Verfahren nach Anspruch 20,
**dadurch gekennzeichnet,**
**dass** während des Ausrückens der Überbrückungskupplung (56) eine zusätzliche Durchflußöffnung (124) zwischen dem hydrodynamischen Kreis (24) und dem Druckraum (55) geöffnet wird.

## Claims

1. Hydrodynamic coupling device (1), comprising at least one pump wheel (17) connected to a drive (2) via a clutch housing (5) and a turbine wheel (19) connected to an output drive (43) for forming a hydrodynamic circuit (24), a lock-up clutch (56) with at least one piston (54) and at least one friction surface (69) acting between said at least one piston (54) and an adjacent support for connecting the drive (2) to the output drive (43) while bypassing the hydrodynamic circuit (24), and a pressure circuit (97) in the form of a dual-line system with a first pressure medium conduit (60) for supplying the hydrodynamic circuit (24) with coupling fluid and with a second pressure medium conduit (62) for supplying a pressure chamber (55) associated with the piston (54) with coupling fluid, the lock-up clutch (56) being enclosed at least substantially by the hydrodynamic circuit (24), with which hydrodynamic circuit (24) there are associated at least one seal (82) at least reducing an exchange of coupling fluid with the pressure chamber (55) and at least one throttle point (80) ensuring a defined exchange of coupling fluid with the pressure chamber (55), **characterized in that** a housing cover (7) of the clutch housing (5) acts as a first wall (142) of the pressure chamber (55) and the piston (54) acts with its side (139) which faces the at least one friction surface (69) of the lock-up clutch (56) as a second wall (144) of the pressure chamber (55) which, on its radial outer side, has a seal (82) which acts between the two walls (142, 144) with respect to the hydrodynamic circuit (24).

2. Hydrodynamic coupling device according to Claim 1, **characterized in that** the throttle point (80) is dimensioned in accordance with predefined pressure and filling conditions at least in the hydrodynamic circuit (24).

3. Hydrodynamic coupling device according to Claim 1 or 2 having flow paths (130, 132) which are connected in each case to a fluid medium supply (95) which is assigned to a pressure source (93), and of which flow paths (130, 132) at least one first flow path (130) is provided radially between an impeller hub (11) which is assigned to the impeller (17) and the output (43), and at least one second flow path (132) is provided in the region of extent of the output (43), and having pressure medium lines (60, 62), of which the first (60) is provided for producing a connection between the fluid medium supply (95) and the hydrodynamic circuit (24) and the second (62) is provided for producing a connection between the fluid medium supply (95) and the pressure chamber (55), **characterized in that** the first flow path (130) and the first pressure medium line (60) connect the fluid medium supply (95) to the hydrodynamic circuit (24) and the second flow path (132) and the second pressure medium line (62) connect the fluid medium supply (95) to the pressure chamber (55).

4. Hydrodynamic coupling device according to one of Claims 1 to 3 having a transmission input shaft (36) which forms the output (43), a supporting shaft (30) for a freewheel (27), which supporting shaft (30) encloses said transmission input shaft (36) radially, and an impeller hub (11) which in turn encloses the supporting shaft (30) radially, the impeller hub (11) radially delimiting a substantially annular radially outer throughflow channel (41) together with the supporting shaft (30), the supporting shaft (30) radially delimiting a substantially annular radially inner throughflow channel (42) together with the transmission input shaft (36), and the transmission input shaft (36) radially delimiting a centre hole (37), **characterized in that** at least one of the two throughflow channels (41, 42) which are arranged at a radial offset with respect to one another serves as first flow path (130) and the centre hole (37) serves as second flow path (132).

5. Hydrodynamic coupling device according to Claim 1, **characterized in that** the seal (82) is received on a third wall (146) which is connected to the first wall (142) in a pressuretight manner, and extends substantially radially in the direction of the second wall (144) and therefore of the piston (54).

6. Hydrodynamic coupling device according to Claim 5, **characterized in that** the piston (54) preferably has a formed portion in the radially central region (77), which formed portion extends substantially in the direction of the hydrodynamic circuit (24) and serves as a bearing point for the seal (82) by way of its side which faces the third wall (146).

7. Hydrodynamic coupling device according to Claim 5 or 6, **characterized in that** the third wall (146) of the pressure chamber (55) serves to accommodate the throttle point (80) acting between the hydrodynamic circuit (24) and the pressure chamber (55).

8. Hydrodynamic coupling device according to any one of Claims 5 to 7, **characterized in that** the throttle point (80) is provided immediately adjacent to the seal (82) in the third wall (146).

9. Hydrodynamic coupling device according to any one of Claims 5 to 8, **characterized in that** the throttle point (80) is formed by at least one through-aperture (81) provided in the third wall (146).

10. Hydrodynamic coupling device according to any one of Claims 1 to 9, **characterized in that** the piston (54) is axially preloaded with respect to the friction surface (69) of the lock-up clutch (56) by means of an axial spring element (58).

11. Hydrodynamic coupling device according to Claim 10, **characterized in that** the piston (54) can be loaded by the axial spring element (58) with a preload acting away from the friction surface (69).

12. Hydrodynamic coupling device according to any one of Claims 1 to 11, **characterized in that** the second pressure medium conduit (62) is connected to the pressure chamber (55) by at least one passage (136) which runs with at least one radial component.

13. Hydrodynamic coupling device according to one of Claims 5 to 9 having a lock-up clutch (56) which at least has a disc (65, 66), **characterized in that** the third wall (146) of the pressure chamber (55) is formed by a disc carrier (86) which attaches the disc (65) fixedly in terms of rotation to the clutch housing (5).

14. Hydrodynamic coupling device according to one of Claims 1 to 13, **characterized in that** a non-return valve (116) is accommodated in the piston (54) which serves as second wall (144) between the pressure chamber (55) and the hydrodynamic circuit (24), which non-return valve (116) releases a throughflow in the case of an excess pressure in the pressure chamber (55) but in contrast suppresses a throughflow of clutch fluid in the case of an excess pressure in the hydrodynamic circuit (24).

15. Hydrodynamic coupling device according to Claim 14, **characterized in that** the non-return valve (116) is positioned in an axially displaceable manner via a stem (120) provided in a receiving opening (122) of the piston (54), and covers at least one through-flow orifice (124) in the piston (54) with a closing lid (118) in the closed position, but opens said at least one through-flow orifice (124) in the open position.

16. Hydrodynamic coupling device according to Claim 14 or 15, **characterized in that** the non-return valve (116) is made of a plastics material which can be subjected to pressure loads and to thermal loads.

17. Hydrodynamic coupling device according to any one of Claims 1 to 16 with a lock-up clutch (56) which has at least one friction surface (69) provided with a grooving (70), **characterized in that** the grooving (70) has at least one high-volume grooving channel (126) between at least two friction segments (128).

18. Hydrodynamic coupling device according to Claim 17, **characterized in that** the grooving (70) has a multiplicity of grooving channels (126) between friction segments (128).

19. Hydrodynamic coupling device according to one of Claims 1 to 18, **characterized in that** the piston (54) is attached by means of an axial suspension system (58) in a rotationally fixed but axially displaceable manner to an anti-rotation safeguard (76) which is rotationally fixed to the clutch housing (5).

20. Method for the throughflow of a hydrodynamic coupling device (1) according to Claim 3 along the following throughflow path:
■ for an approach of the piston (54) to the friction surface (69) for engaging the lock-up clutch (56), beginning with the removal of clutch fluid from the fluid medium supply (95) which is assigned to the pressure source (93) and continuing with the clutch fluid being forwarded via the first flow path (130) and the first pressure medium line (60) and the hydrodynamic circuit (24) with the friction surface (69) of the lock-up clutch (56) being flowed through, in order to open from the hydrodynamic circuit (24) after passage of the throttle point (80) into the pressure chamber (55), from where the clutch fluid is returned into the fluid medium supply (95) via the second pressure medium line (62) and the second flow path (132), or
■ for a distancing of the piston (54) from the friction surface (69) for disengaging the lock-up clutch (56), beginning with the removal of clutch fluid from the fluid medium supply (95) and continuing with the clutch fluid being forwarded via the second flow path (132) and the second pressure medium line (62) until reaching the pressure chamber (55), in order to pass from there after passage of the throttle point (80) into the hydrodynamic circuit (24), in order to pass from there after passage of the friction surface (69) of the lock-up clutch (56) via the first pressure medium line (60) and the first flow path (130) back into the fluid medium supply (95).

21. Method according to Claim 20, **characterized in that**, during the disengagement of the lock-up clutch (56), an additional through-flow orifice (124) is opened between the hydrodynamic circuit (24) and the pressure chamber (55).

## Revendications

1. Dispositif d'embrayage hydrodynamique (1), comportant au moins une roue de pompe (17) reliée par l'intermédiaire d'un carter d'embrayage (5) avec une transmission d'entrée (2) et une roue de turbine (19) reliée avec une transmission de sortie (43), pour former un circuit hydrodynamique (24), un accouplement de pontage (56) avec au moins un piston (54) et au moins une surface de friction active (69) entre celui-ci et un appui voisin pour la liaison de la transmission d'entrée (2) avec la transmission de sortie (43), en contournant le circuit hydrodynamique (24), et un circuit sous pression (97) sous forme d'un système à deux conduits (24) avec un premier conduit d'agent sous pression (60) pour l'alimentation en fluide d'embrayage du circuit hydrodynamique (24) et avec un deuxième conduit d'agent sous pression (62) pour l'alimentation en fluide d'embrayage d'une chambre de compression (55) associée au piston (54), l'accouplement de pontage (56) étant entouré au moins sensiblement par le circuit hydrodynamique (24), auquel est associé au moins un joint (82) réduisant pour le moins un échange de fluide d'embrayage avec la chambre de compression (55), ainsi qu'au moins une zone d'étranglement (80) permettant un échange défini de fluide d'embrayage avec la chambre de compression,
**caractérisé en ce que**,
un couvercle de carter (7) du carter d'embrayage (5) est actif en tant que première paroi (142) de la chambre de compression (55) et avec son côté (139) opposé à la au moins une surface de friction (69) de l'accouplement de pontage (56), le piston (54) est actif en tant que deuxième paroi (144) de la chambre de compression (55), qui sur sa face extérieure radiale dispose du joint (82) actif entre les deux parois (142, 144) par rapport au circuit hydrodynamique (24).

2. Dispositif d'embrayage hydrodynamique selon la revendication 1, **caractérisé en ce que**,
la zone d'étranglement (80) est au moins dimensionnée dans le circuit hydrodynamique (24) en correspondance avec des conditions de pression et de remplissage prédéfinies.

3. Dispositif d'embrayage hydrodynamique selon la revendication 1 ou 2 avec des voies d'écoulement (130, 132), qui sont reliées chacune avec une réserve d'agent fluide (95) associée à une source de pression (93) et dont au moins une première (130) est prévue radialement entre un moyeu de roue de pompe (11) associé à la roue de pompe (7) et la transmission de sortie (43) et au moins une deuxième (132) est prévue dans la zone d'extension de la transmission de sortie (43) et avec des conduits d'agent sous pression (60, 62), dont le premier (60) est prévu pour établir une liaison entre la réserve d'agent fluide (95) et le circuit hydrodynamique (24) et le deuxième (62) est prévu pour établir une liaison entre la réserve d'agent fluide (95) et le chambre de compression (55), **caractérisé en ce que**
la première voie d'écoulement (130) et le premier conduit d'agent sous pression (60) relient la réserve d'agent fluide (95) avec le circuit hydrodynamique (24) et la deuxième voie d'écoulement (132) et le deuxième conduit d'agent sous pression (62) relient la réserve d'agent fluide (95) avec la chambre de compression (55).

4. Dispositif d'embrayage hydrodynamique selon l'une quelconque des revendications 1 à 3 avec un arbre d'entrée de boîte de vitesses (36) formant la transmission de sortie (43), un arbre d'appui (30) entourant radialement ce dernier, pour une roue libre (27) et un moyeu de roue de pompe (11) entourant radialement pour sa part l'arbre d'appui (30), le moyeu de roue de pompe (11) délimitant en commun avec l'arbre d'appui (30) un canal de circulation (41) radialement extérieur, sensiblement de forme annulaire et l'arbre d'appui (30) délimitant en commun avec l'arbre d'entrée de boîte de vitesses (36) un canal de circulation radialement intérieur, sensiblement de forme annulaire (42) et l'arbre d'entrée de boîte de vitesses (36) délimitant radialement un perçage central (37),
**caractérisé en ce que**,
au moins l'un des deux canaux de circulation (41, 42) disposés avec un déport radial mutuel sort en tant que première voie d'écoulement (130) et **en ce que** le perçage central (37) sert de deuxième voie d'écoulement (132).

5. Dispositif d'embrayage hydrodynamique selon la revendication 1, **caractérisé en ce que**, le joint (82) est réceptionné par une troisième paroi (146) reliée de façon étanche à la pression avec la première paroi (142) et **en ce qu'**il s'étend de façon sensiblement radiale en direction de la deuxième paroi (144) et donc du piston (54).

6. Dispositif d'embrayage hydrodynamique selon la revendication 5, **caractérisé en ce que**,
de préférence dans la zone radialement centrale (77), le piston (54) dispose d'une déformation qui s'étend sensiblement en direction du circuit hydrodynamique (24) et par sa face dirigée vers la troisième paroi (146), il sert d'endroit d'appui pour le joint (82).

7. Dispositif d'embrayage hydrodynamique selon la revendication 5 ou 6, **caractérisé en ce que**
la troisième paroi (146) de la chambre de compression (55) sert de logement de la zone d'étranglement (80) active entre le circuit hydrodynamique (24) et la chambre de compression (55).

8. Dispositif d'embrayage hydrodynamique selon l'une quelconque des revendications 5 à 7, **caractérisé en ce que**
la zone d'étranglement (80) est prévue directement au voisinage du joint (82) dans la troisième paroi (146).

9. Dispositif d'embrayage hydrodynamique selon l'une quelconque des revendications 5 à 8, **caractérisé en ce que**
la zone d'étranglement (80) est formée par au moins un orifice de passage (81) prévu dans la troisième paroi (146).

10. Dispositif d'embrayage hydrodynamique selon l'une quelconque des revendications 1 à 9, **caractérisé en ce que**,
au moyen d'une suspension élastique axiale (58), une précontrainte axiale du piston (54) par rapport à la surface de friction (69) de l'accouplement de pontage (56) est assurée.

11. Dispositif d'embrayage hydrodynamique selon la revendication 10, **caractérisé en ce que**
le piston (54) est susceptible d'être soumis par la suspension élastique axiale (58) à une précontrainte s'éloignant de la surface de friction (69).

12. Dispositif d'embrayage hydrodynamique selon l'une quelconque des revendications 1 à 11, **caractérisé en ce que**
le deuxième conduit d'agent sous pression (62) est relié par au moins un canal (136) s'écoulant avec au moins une composante radiale avec la chambre de compression (55).

13. Dispositif d'embrayage hydrodynamique selon l'une quelconque des revendications 5 à 9, avec un accouplement de pontage (56) disposant d'au moins une lamelle (65, 66)
**caractérisé en ce que**,
la troisième paroi (146) de la chambre de compression (55) est formée par un porte-lamelle (86) reliant la lamelle (65) de façon solidaire en rotation avec le carter d'embrayage (5).

14. Dispositif d'embrayage hydrodynamique selon l'une quelconque des revendications 1 à 13, **caractérisé en ce que**
dans le piston (54) servant de deuxième paroi (144) entre la chambre de compression (56) et le circuit hydrodynamique (24) est réceptionné un clapet antiretour (116), qui dans le cas d'une surpression dans la chambre de compression (55) libère une circulation d'écoulement, mais en revanche dans le cas d'une surpression dans le circuit hydrodynamique (24) empêche un passage de fluide d'embrayage.

15. Dispositif d'embrayage hydrodynamique selon la revendication 14, **caractérisé en ce que**,
le clapet anti-retour (116), est positionné en étant déplaçable en direction axiale par l'intermédiaire d'une tige (120) prévue dans un orifice de logement (122) du piston (54) et en position de fermeture, recouvre au moins un orifice de passage (124) dans le piston (54) par un couvercle de fermeture (118) et le libère au contraire, en position d'ouverture.

16. Dispositif d'embrayage hydrodynamique selon la revendication 14 ou 15, **caractérisé en ce que**,
le clapet anti-retour (116), consiste dans une matière plastique susceptible d'être soumise à une pression et à une contrainte thermique.

17. Dispositif d'embrayage hydrodynamique selon l'une quelconque des revendications 1 à 16 avec un accouplement de pontage (56), comportant au moins une surface de friction (69) munie d'un rainurage (70),
**caractérisé en ce que**,
le rainurage (70) dispose d'au moins un canal de rainurage (126) à fort volume, entre au moins deux segments de friction (128).

18. Dispositif d'embrayage hydrodynamique selon la revendication 17, **caractérisé en ce que**
le rainurage (70) dispose d'une pluralité de canaux de rainurage (126) entre des segments de friction (128).

19. Dispositif d'embrayage hydrodynamique selon l'une quelconque des revendications 1 à 18, **caractérisé en ce que**
le piston (54) est relié au moyen d'une suspension élastique axiale (58), de façon solidaire en rotation, mais déplaçable en direction axiale à une sécurité antirotation (76) solidaire en rotation avec le carter d'embrayage (5).

20. Procédé pour l'irrigation d'un dispositif d'embrayage hydrodynamique (1) selon la revendication 3 le long de la voie de passage suivante:
■ pour une approche du piston (54) de la surface de friction (69) pour embrayer l'accouplement de pontage (56), commençant par le prélèvement de fluide d'embrayage dans la réserve d'agent fluide (95) associée à la source de pression (93) et se poursuivant par la retransmission du fluide d'embrayage via la première voie d'écoulement (130) et le premier conduit d'agent sous pression (60) ainsi que le circuit hydrodynamique (24) en traversant la surface de friction (69) de l'accouplement de pontage (56), pour déboucher à partir du circuit hydrodynamique (24) après passage de la zone d'étranglement (80) dans la chambre de compression (56), à partir de laquelle le fluide d'embrayage est alimenté via le deuxième conduit d'agent sous pression (62) et la deuxième voie d'écoulement (132) dans la réserve d'agent fluide (95) ou
■ pour un éloignement du piston (54) de la surface de friction (69) pour le débrayage de l'accouplement de pontage (56), commençant par le prélèvement de fluide d'embrayage dans la réserve d'agent fluide (95) et se poursuivant par la retransmission du fluide d'embrayage via la deuxième voie d'écoulement (132) et le deuxième conduit d'agent sous pression (62) jusqu'à l'atteinte de la chambre de compression (55), pour arriver à partir de celle-ci, après le passage de la zone d'étranglement (80) dans le circuit hydrodynamique (24) pour arriver à partir de ce dernier, après passage de la surface de friction (69) de l'accouplement de pontage (56), via le premier conduit d'agent sous pression (60) et la première voie d'écoulement (130) dans la réserve d'agent fluide (95).

21. Procédé selon la revendication 20,
**caractérisé en ce que**,
pendant le débrayage de l'accouplement de pontage (56) un orifice de passage (124) supplémentaire s'ouvre entre le circuit hydrodynamique (24) et la chambre de compression (55).
